# EUROPÄISCHE PATENTSCHRIFT

(11) **EP 0 775 059 B1**
(45) Veröffentlichungstag und Bekanntmachung des Hinweises auf die Patenterteilung: **19.05.1999**
(21) Anmeldenummer: 95906303.3
(22) Anmeldetag: 05.01.1995
(51) Int. Cl.: B60B 7/01

(54) **KRAFTFAHRZEUGRAD MIT RINGFÖRMIGER VORRICHTUNG**
MOTOR VEHICLE WHEEL WITH AN ANNULAR DEVICE
ROUE D'AUTOMOBILE POURVUE D'UN DISPOSITIF ANNULAIRE

(30) Priorität: 09.09.1994 DE 4432132
(43) Veröffentlichungstag der Anmeldung: 28.05.1997
(73) Patentinhaber: BBS Motorsport & Engineering GmbH, 77761 Schiltach (DE)
(72) Erfinder: BAUMGARTNER, Heinrich, D-77761 Schiltach (DE)
(74) Vertreter: Patentanwälte Westphal, Mussgnug & Partner
(86) Internationale Anmeldenummer: EP9500035
(87) Internationale Veröffentlichungsnummer: WO9607554

(56) Entgegenhaltungen:
- EP-A- 0 449 188
- WO-A-93/07012

## Beschreibung

Die Erfindung betrifft ein Kraftfahrzeugrad gemäß dem Oberbegriff des Anspruchs 1.

Eine häufige Ursache für die Beschädigung von Kraftfahrzeugrädern rührt daher, daß der Fahrer beim Einparken des Kraftfahrzeugs mit der nach außen weisenden Seite des bereiften Rades den Bordstein berührt, insbesondere, wenn der Winkel zwischen dem Bordstein und dem bereiften Rad spitz ist. Der Reifen, der das Kraftfahrzeugrad infolge seiner größeren Breite im allgemeinen schützt, wird bei einer Bordsteinberührung häufig so stark deformiert, daß die Außenseite des Felgenhorns gegen den Bordstein schrammt und hierdurch beschädigt wird. Natürlich ist es äußerst ärgerlich, wenn das Felgenhorn und das Aussehen des Rades infolge solch eines Vorfalls beeinträchtigt sind, insbesondere dann, wenn es sich um ein besonders wertvolles Rad handelt.

Zur Vermeidung derartiger Beschädigungen am Felgenhorn ist aus der WO-A-93/07012 eine ringförmige Vorrichtung bekannt, die auf der Sichtseite eines Felgenhorns anbringbar ist und diese teilweise überdeckt. Die als Schutskörper ausgebildete Vorrichtung ist mit einem Klebemittel an dem Felgenhorn befestigt. Des weiteren ist bekannt, daß der Schutzkörper in einer rillen- oder nutenförmigen Vertiefung des Felgenhorns mit zumindest einem Einrastelement befestigbar ist.

Die geklebte Ausführungsform weist jedoch den Nachteil auf, daß vor dem Anbringen des Schutzkörpers am Felgenhorn ein Auftragen eines Klebemittels erforderlich ist. Dies ist zeitaufwendig und beim Austausch eines beschädigten Schutzkörpers ist eine hohe Bearbeitungszeit erforderlich, bis das Felgenhorn vom alten Klebemittel befreit ist und neues Klebemittel aufgetragen wurde. Darüber hinaus muß das Klebemittel spezifische Eigenschaften aufweisen, um die im Betrieb auftretenden Kräfte, die auf den Schutzkörper wirken, aufnehmen zu können und um den unterschiedlichen Witterungsverhältnissen standhalten zu können. Die in eine Vertiefung des Felgenhorns eingreifenden Einrastelemente weisen den Nachteil auf, daß eine aufwendige Herstellung des Felgenhorns gegeben ist und daß eine Verwendung der Felge ohne Schutzkörper ästhetisch unschön ist.

Aufgabe der Erfindung ist es, diese Nachteile zu vermeiden und ein Fahrzeugrad bereitzustellen, bei dem auf einfache und kostengünstige Weise Beschädigungen am Felgenhorn vermieden werden können.

Die Aufgabe wird durch den kennzeichnenden Teil des Anspruchs 1 und 9 gelöst. Durch die Bereitstellung einer ringförmigen, die äußere Seite des Felgenhorns wenigstens teilweise überdeckenden Vorrichtung an dem Kraftfahrzeugrad wird bei einer Bordsteinberührung nicht mehr das Felgenhorn beschädigt, sondern die ringförmige Vorrichtung, insbesondere ihre nach außen weisende Seite, die Sichtseite. Da die Verbindung zwischen der ringförmigen Verbindung und dem Rad lösbar ist, kann die beschädigte Vorrichtung gegen eine neue einfach ausgetauscht werden. Das Rad bleibt wie neu und sein Wederverkaufswert bleibt ungeschmälert.

Von besonderem Interesse ist die Erfindung natürlich für Räder der gehobenen Preisklasse wie Aluminiumräder. Insbesondere bei solchen zu den Statussymbolen zählenden Räder ist das Aussehen von erheblichem Interesse, so daß Kratzer oder Beschädigungen der Außenseite des Felgenhorns den Besitzer besonders stören. Sofern das KFZ samt Rad wieder verkauft wird, braucht man das Rad nicht polieren und lackieren zu lassen. Das gesamte KFZ profitiert vom quasi neuen Rad, denn die Räder sind bekanntlich die Beine des Autos.

Ein weiterer Vorteil der Erfindung besteht darin, daß die Herstellungskosten des Fahrzeugrades vermindert werden, da für den von der Vorrichtung abgedeckten Teil des Rades die sich aus optischen Gründen anschließenden Verfahrensschritte wie Polieren, Lackieren.. entfallen können.

Die vorteilhaften Verbindungen zwischen der Vorrichtung und dem Rad werden gemäß den Merkmalen des Anspruch 1 erreicht, wenn die Befestigungsmittel den oberen oder den unteren Rand des Felgenhorns wenigstens teilweise übergreifen, insbesondere, wenn der oder die Ränder des Felgenhorns und die Befestigungsmittel so ausgebildet sind, daß die Vorrichtung mit dem/den Befestigungsmitteln nur durch eine im wesentlichen parallel der Rotationsachse des Rades in Richtung Radaußenseite wirkende Kraft von dem Rad gelöst werden kann. Die vorteilhaften Verbindungen bei einem zweiteiligen Rand können gemäß Anspruch 9 erreicht werden, wenn die Befestigungsmittel zwischen das Felgenhorn und den Radstern wenigstens teilweise hineinreichen.

Weiterhin ist es vorteilhafterweise gemäß Anspruch 2 und 3 möglich, daß die Befestigungsmittel in eine Ringnut an der Außenseite des Felgenhorns oder der Radscheibe eingreifen. Die Ringnut und die Befestigungsmittel sollten so geformt sein, daß ein unbeabsichtigtes Lösen der Verbindung Rad - Vorrichtung verhindert wird. Weitere Ausgestaltungen ergeben sich aus den Ansprüchen 4 bis 8. Die Weiterbildungen nach Anspruch 5 und 6 dienen dazu, die Verbindung zwischen dem KFZ-Rad und der Vorrichtung zu verbessern und ein unbeabsichtigtes Lösen zu verhindern.

Durch die Ausbildung gemäß Anspruch 10 wird verhindert, daß durch die Vorrichtung zusätzliche Momente am Rad oder eine Unwucht auftritt.

Generell kann die Sichtseite der Vorrichtung verschieden geformt sein. Insbesondere bewährt haben sich gemäß Anspruch 11 und 12 eine ebene oder eine nach außen gewölbte Sichtseite, obwohl es ebenfalls möglich ist, die Sichtseite der Vorrichtung je nach Geschmack nach außen oder innen spitz zulaufend, nach innen gewölbt oder auch anders geformt auszubilden.

Die Rückseite der Vorrichtung sollte gemäß Anspruch 13 im wesentlichen an der Außenseite des Felgenhorns anliegen, entweder mit der gesamten Fläche der Rückseite oder bei einer leicht konkav geformten Rückseite wenigstens an den äußeren Enden. Die Form der Außenseite des Felgenhorns sollte der Formung der Rückseite der Vorrichtung im wesentlichen entsprechen.

Damit das Felgenhorn bei einer Bordsteinberührung nicht beschädigt wird, ist es vorteilhaft, wenn die zwischen der Sichtseite und Rückseite der Vorrichtung gemessene Dicke des verwendeten Materials so groß ist, daß sie die Tiefe eines Kratzers übersteigt. Vorzugsweise beträgt die Materialdicke zwischen 1 und 5 mm. Besonders bevorzugt sind etwa 2 mm.

Durch Weiterbildungen nach Anspruch 15 und 16 wird sowohl die einfache Austauschbarkeit der Vorrichtung als auch eine gegen ungewolltes Ablösen der Vorrichtung gesicherte Verbindung zwischen dem Rad und der ringförmigen Vorrichtung erreicht.

Die Materialien gemäß Anspruch 17 und 18 haben sich für die Herstellung der Vorrichtung besonders bewährt. Die Verwendung von Edelstahl hat den Vorteil, daß die Oberfläche nicht zusätzlich zum Schutz behandelt werden muß und der Oberflächenglanz nicht mit der Zeit nachläßt. Vorrichtungen aus Aluminium besitzen ein relativ geringes Gewicht. Ein noch leichterer Werkstoff ist Kunststoff, der darüber hinaus den Vorteil bietet, daß die ringförmigen Vorrichtungen hieraus einfach und kostengünstig herzustellen sind.

Zur Herstellung der ringförmigen Vorrichtungen können verschiedene Verfahren angewandt werden. Die Aluminium- oder Edelstahlvorrichtungen sind vorzugsweise Ziehteile, insbesondere Tiefziehteile. Es ist jedoch auch möglich, daß sie an ihrem äußeren und inneren Radius gestanzt oder gedreht werden. Natürlich ist es ebenfalls möglich, die Vorrichtung aus dem Vollen zu drehen. Ferner kann Bandmaterial vom Coil abgezogen werden. Dieses kann durch eine Rollformstrecke geführt werden, zu einem Ring geformt werden und seine beiden zunächst getrennten Enden können stoffschlüssig miteinander verbunden werden.

Wird Kunststoff als Material verwendet, so ist der Spritzguß als Verfahren besonders geeignet.

Um die Vorrichtung den ästhetischen Anforderungen anzupassen und die Oberfläche zu schützen ist es vorteilhaft, daß die Vorrichtung gemäß Anspruch 19 behandelt ist.

Den ästhetischen Ansprüchen des Verbrauchers wird u.a. dadurch Rechnung getragen, daß die Sichtseite der Vorrichtung poliert oder diamantgedreht wird. Farbvarianten lassen sich durch Lackieren oder elektrochemische Verfahren erzielen.

Wie bereits angeführt, wird die Vorrichtung vorteilhafterweise am Rad ein- oder aufgeklipst. Es ist jedoch ebenfalls möglich, sie mit dem Rad zu verschrauben oder auf andere Art und Weise an diesem zu befestigen. Sie kann auch angeklebt werden, sofern ein Klebemittel verwendet wird, das sich unter bestimmten Bedingungen wieder entfernen läßt.

Es ist ebenfalls möglich, als Vorrichtung eine Folie, z.B. Aluminiumfolie, zu verwenden, die auf dem Felgenhorn aufgeklebt wird.

Im allgemeinen ist es von Vorteil, daß die Befestigungsmittel eine form- und/oder kraftschlüssige Verbindung gemäß Anspruch 20 zwischen Rad und Vorrichtung ermöglichen.

Durch die im wesentlichen ringförmigen und/oder in sich geschlossenen Befestigungsmittel gemäß Anspruch 21 ist es möglich, einen guten Form- und/oder Kraftschluß zwischen Vorrichtung und Rad zu erzielen.

Es ist jedoch ebenfalls möglich, Befestigungsmittel zu verwenden, die nicht ringförmig oder in sich geschlossen sind, sondern in bestimmten Abständen an der Vorrichtung angeordnet sind - beispielsweise verschiedene einzelne Aufklipsvorrichtungen oder Bohrungen mit Schrauben.

Diese einzelnen Befestigungsmittel können jedoch auch einzelne, an der Vorrichtung angeordnete Lappen, beispielsweise aus Metall sein, die über den äußeren Rand des Felgenhorns gebogen und durch den Reifendruck an der Innenseite des Felgenhorns angepreßt werden. Montiert wird eine solche Vorrichtung mit den einzelnen Lappen vorzugsweise am unbereiften Rad oder bei vermindertem Reifendruck.

Generell ist es notwendig, daß die Befestigungsmittel so auf der Vorrichtung angeordnet oder mit ihr verbunden sind, daß an dem Kraftfahrzeugrad keine Unwucht auftritt und sich die Vorrichtung nicht ungewollt ablöst.

Bei mehrteiligen Rädern ist es ebenfalls möglich, daß die Befestigungsmittel die Befestigungsmittel überdies Bohrungen aufweisen können, die mit Bohrungen in dem Radkranz und der Felge fluchten, so daß die Vorrichtung mit den Schrauben, mit denen der Radkranz mit der Felge verschraubt wird, befestigt werden kann.

Die Ansprüche 24 bis 27 beschreiben bevorzugte Ausführungsformen bei einer Vorrichtung für mehrteilige Räder bezüglich der Breite der Sichtseite der ringförmigen Vorrichtung, die sich aus der Differenz von Außenradius r_{außen} und Innenradius rᵢₙₙₑₙ berechnet. Vorzugsweise ist die Breite der Sichtseite der Vorrichtung kleiner ist als der Innenradius der Vorrichtung, damit das Rad nicht durch die Vorrichtung abgedeckt wird. Durch die Weiterbildung gemäß Anspruch 4 wird sowohl der erforderliche Schutz des Felgenhorns vor Beschädigungen, als auch ein geringer Abdeckgrad des Rades erreicht, so daß die Ästhetik des Rades zur Geltung kommen kann. Berechnet man den prozentualen Anteil der durch die Vorrichtung abgedeckten Fläche im Verhältnis zu der gesamten, durch das obere Ende des Felgenhorns begrenzten Fläche, so ergibt sich ein Abdeckgrad von höchstens 36%. Besonders bevorzugt sind Abdeckgrade von weniger als 25%. Durch die geringe Breite der Vorrichtung wird auch weniger Material zur Herstellung der Vorrichtung notwendig, was kostengünstig ist und auch die Menge an Abfall oder an zu recycelndem Material senkt. Durch die ringförmige Ausbildung der Vorrichtung mit den bevorzugten Breiten wird die Luftzirkulation am Rad nicht nachteilig beeinflußt.

Die Vorrichtung des Kraftfahrzeugrades wird insbesondere zum Schonen des Felgenhorns verwendet. Eine weitere Anwendung liegt darin, auf der Sichtseite des Felgenhorns angebrachte alphanumerische Information wie beispielsweise die Seriennummer abzudecken. Die alphanumerische Information ist so auf einfache Weise zugänglich, ohne daß sie die Ästhetik des Rades vermindert. Zugleich hat man einen Beitrag zum Diebstahlschutz bzw. der Diebstahlaufklärung.

Für das erfindungsgemäße Rad können generell alle möglichen Arten von Felgen wie beispielsweise Tiefbett-, Schrägschulter- und Flachbettfelgen verwendet werden. Die Erfindung kann gleichermaßen bei einteiligen oder mehrteiligen Rädern verwendet werden.

Weitere Vorteile und Ausgestaltungen ergeben sich aus der nachfolgenden Beschreibung anhand von Zeichnungen. Es zeigen.
- Figur 1:: die Draufsicht auf die Sichtseite eines Teil eines Kraftfahrzeugrades
- Figur 2:: eine Seitenansicht des Kraftfahrzeugrades aus Fig. 1 im Bereich der Felge
- Figur 3:: den Bereich des Felgenhorns mit der ringförmigen Vorrichtung aus Fig. 2
- Figur 4:: eine Seitenansicht einer zweiten und dritten Ausführungsform
- Figur 5:: eine Seitenansicht einer vierten und fünften Ausführungsform bei einem mehrteiligen Rad

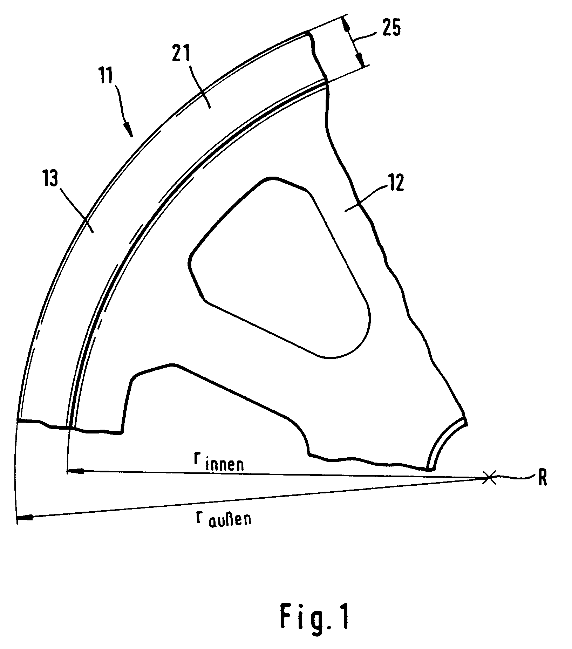

In Figur 1 erkennt man einen Teil des Radsterns 12 sowie die ringförmige Vorrichtung 13 des Kraftfahrzeugrads 11 mit der Rotationsachse R. Der Radstern 12 ist speichenförmig ausgebildet. Der Innendurchmesser rᵢₙₙₑₙ und der Außendurchmesser r_{außen} definieren die Breite 25 der Sichtseite 21 der ringförmigen Vorrichtung 13. Die Vorrichtung 13 verdeckt die Sicht auf die Felge bzw. das Felgenhorn.

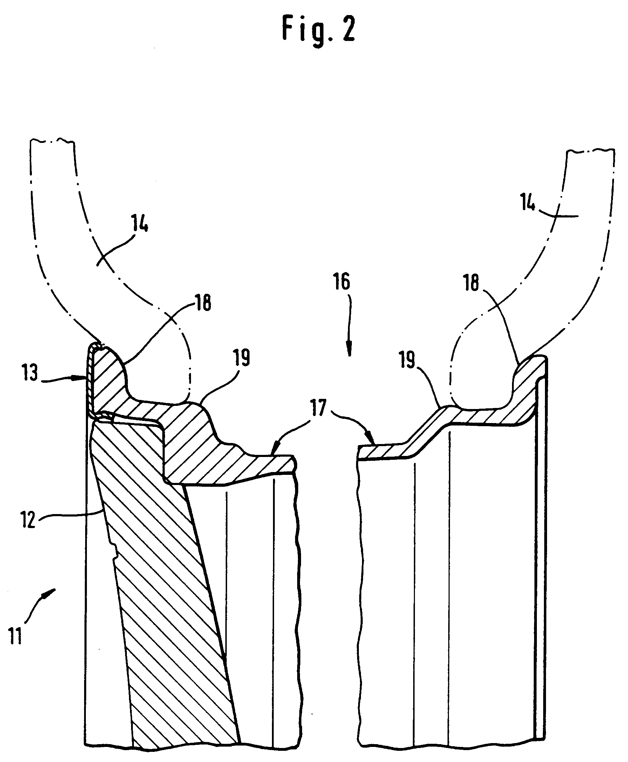

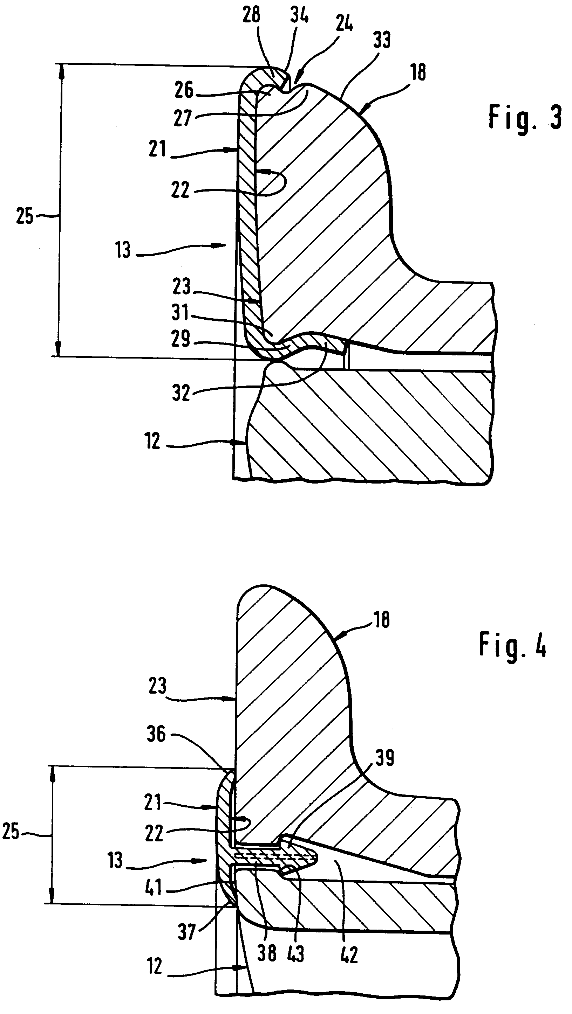

In Fig. 2 bzw. der Vergrößerung in Fig. 3 erkennt man, daß die Vorrichtung 13 die Außenseite 23 des Felgenhorns 18 abdeckt. In Fig. 2 ist die Felge 16 mit dem Felgenhorn 18, den Felgenschultern 19 und dem Felgenbett 17 dargestellt. Auch der Reifen 14 ist schematisch angedeutet. Die Rückseite 22 der Vorrichtung 13 liegt an der nach außen weisenden Seite 23 des Felgenhorns 18 an. An der oberen Seite des Felgenhorns 18 ist eine Einkerbung 24 zwischen zwei Schultern 26, 27.

Die Vorrichtung 13 weist Befestigungsmittel auf, die als zwei Verankerungsrippen 28, 29 am oberen und unteren Ende der Vorrichtung 13 ausgebildet sind. Die Verankerungsrippen 28, 29 übergreifen die Schulter 26 am oberen Ende des Felgenhorns 18 bzw. die Schulter 31 am unteren Ende des Felgenhorns 18, und zwar entlang des gesamten Radumfangs. Dadurch, daß die Verankerungsrippen 28, 29 die Schultern 26, 31 vollständig übergreifen und die Rückseite 22 der Vorrichtung 13 an der nach außen weisenden Seite 23 des Felgenhorns 18 anliegt, wird eine form- und kraftschlüssige Verbindung erreicht. Zum Lösen der Verbindung muß eine im wesentlichen parallel der zur Rotationsachse R nach außen wirkende Kraft aufgewendet werden. Als weitere Verbesserung der Verbindung zwischen dem Felgenhorn 18 und der Vorrichtung 13 weist die untere Verankerungsrippe 29 noch eine Zunge 32 auf. Die Befestigungsmittel 28, 29 und die Vorrichtung 13 bilden bei dieser Ausführungsform eine Einheit.

Die nach außen weisende Fläche 34 der Verankerungsrippe 28 erstreckt sich quasi in Verlängerung der ab der Schulter 27 abfallenden Innenseite 33 des Felgenhorns 18.

Fig. 4 zeigt eine zweite und dritte Ausführungsform der Vorrichtung 13. Die Sicht- 21 und die Rückseite 22 der Vorrichtung 13 sind zueinander im wesentlichen parallel. An ihren beiden äußeren Enden 36, 37 verjüngt sich die Vorrichtung 13, die geringfügig konkav geformt ist. Als Befestigungsmittel ist eine Verankerungsrippe 38 vorgesehen, welche im wesentlichen senkrecht zur Rückseite 22 der Vorrichtung 13 ausgerichtet und mit der Vorrichtung 13 verbunden ist. Die Verankerungsrippe 38 weist an ihrem Ende eine ähnlich einem Dreieck geformte Verdickung 39 auf. Durch die nach außen weisende Seite 43 dieses Dreiecks und die durch die Formung der unteren Seite des Felgenhorns 18 und der oberen Seite des Radkranzes 12 sich weitende Öffnung 42 wird die gewünschte Verankerung erzielt. Durch die geringfügig konkave Formung der Vorrichtung 13 wird der Sitz zusätzlich verbessert.

In Fig. 4 deckt die Vorrichtung 13 die Sichtseite 23 des Felgenhorns nicht vollständig ab. Da die Sichtseite 21 der Vorrichtung 13 jedoch weiter nach außen steht als die Außenseite 23 des Felgenhorns 18 und somit bei einer Bordsteinberührung die erste starre Fläche, mit der der Bordstein in Berührung kommt, die Sichtseite 21 der Vorrichtung ist, verhindert auch diese Ausführungsform die Beschädigung der Sichtseite 23 des Felgenhorns. Die Dicke der Vorrichtung 13 beträgt 4 mm. Ein Teil der Vorrichtung erstreckt sich auch über die Außenseite 41 des Radkranzes.

In der ebenfalls in Fig. 4 dargestellten Ausführungsform ist die Verankerungsrippe 38 mit Verdickung 39 ähnlich einem Spreizdübel ausgebildet. Die Verankerungsrippe 38 besteht aus einem oberen und einem unteren Teil, zwischen welchen Teilen sich ein Spalt befindet, der in Fig. 4 gestrichelt angedeutet ist.

In einer weiteren, nicht dargestellten Ausführungsform wird die Verankerung zusätzlich dadurch verbessert, daß die untere Seite des Felgenhorns und die obere Seite des Radkranzes jeweils eine der nach außen weisenden Fläche 43 des Dreiecks entsprechende Flächen aufweisen, gegen die sich die Fläche 43 abstützt.

In einer weiteren Ausführungsform weist die Vorrichtung zur Befestigung Lappen, ähnlich der Verankerungsrippe 28 in Fig. 3 auf. Diese Lappen übergreifen das obere Ende des Felgenhorns 18 jedoch nicht wie in Fig. 3 entlang des gesamten Radumfangs, sondern sie sind vielmehr im wesentlichen äquidistant entlang des äußeren Umfangs der Vorrichtung angeordnet. Diese einzelnen Lappen stehen bei der Montage der Vorrichtung etwa senkrecht zur Sichtseite der Vorrichtung nach hinten ab. Bei der Montage am unbereiften Rad oder am bereiften Rad mit vermindertem Reifendruck werden sie so umgebogen, daß sie an der Innenseite des Felgenhorns im wesentlichen anlegen. Nach der Montage des Reifens werden die Lappen durch den Reifendruck an die Innenseite des Felgenhorns gepreßt. Das obere Ende des Felgenhorns sollte bei dieser Ausführungsform keine Einkerbung 24 gemäß Fig. 3 aufweisen, sondern wie in Fig. 4 ausgebildet sein. Natürlich ist die Befestigung um so besser, je weiter jeder Lappen in den Bereich an der Innenseite des Felgenhorns hineinragt, in dem der Reifen den Lappen gegen das Felgenhorn preßt.

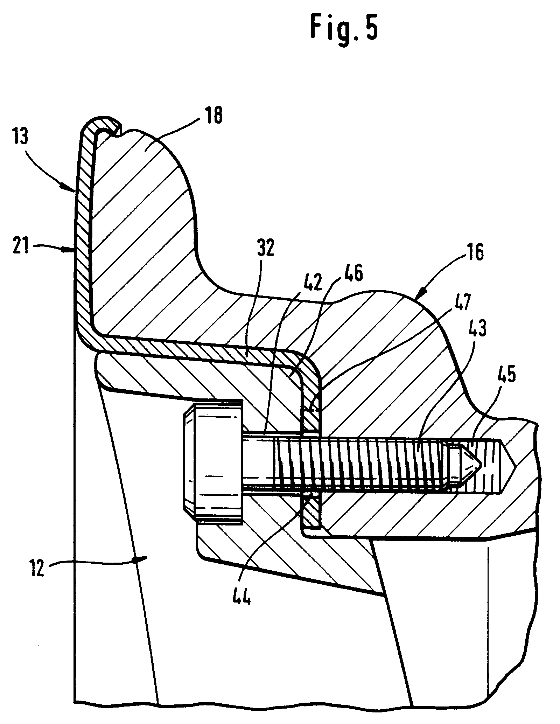

Fig. 5 zeigt eine Seitenansicht eines Teils eines mehrteiligen Rades, bei dem der Radkranz 12 mit der Felge 16 verschraubt ist. Hierfür weisen der Radkranz 12 und die Felge 16 Bohrungen 42, 45 auf. Die Vorrichtung 13 ist in ihrem oberen Bereich gemäß Fig. 3 ausgebildet. Die Zunge 32 ist zwischen der Klemmfläche Radkranz 12 - Felge 16 entlanggeführt und weist ebenfalls eine Bohrung 44 auf. Die Bohrung 44 in der Zunge 32 fluchtet mit der Durchgangsbohrung 42 im Radkranz 12 und der Gewinde-Sacklochbohrung 45 in der Felge 16. Bei dieser Ausführungsform wird die Vorrichtung 13 mit denselben Schrauben 42 befestigt, die zur Befestigung der Felge 16 am Radkranz 12 verwendet werden.

Bei einer weiteren, ebenfalls in Fig. 5 dargestellte Ausführungsform ist die Zunge etwas kürzer und weist auch keine Bohrung auf. Vorzugsweise sollte sie jedoch über das Knie 46 etwa bis zum Ort 47 reichen, damit der gewünschte Halt erzielt wird.

## Patentansprüche

1. Kraftfahrzeugrad mit einer Felge (16) und einem Radstern (12), gegebenenfalls in Speichenform, mit einer ringförmigen Vorrichtung (13), welche Vorrichtung (13) die Sichtseite (23) des Felgenhorns (18) wenigstens teilweise überdeckt und die Verbindung zwischen der ringförmigen Vorrichtung (13) und dem Rad (11) lösbar ist und mit zumindest einem Befestigungsmittel (28, 29, 32),
dadurch gekennzeichnet, daß die Vorrichtung (13) ein den unteren Rand des Felgenhorns (18) wenigstens teilweise übergreifendes und ein den oberen Rand des Felgenhorns (18) wenigstens teilweise übergreifendes Befestigungsmittel (28, 29, 32) aufweist.

2. Kraftfahrzeugrad nach Anspruch 1, dadurch gekennzeichnet, daß die Befestigungsmittel (28) in eine Ringnut an der Außenseite des Felgenhorns eingreifen.

3. Kraftfahrzeugrad nach Anspruch 1, dadurch gekennzeichnet, daß die Befestigungsmittel (29, 32) in eine Ringnut in der Radscheibe eingreifen.

4. Kraftfahrzeugrad nach Anspruch 1, dadurch gekennzeichnet, daß das Befestigungsmittel 28, 29, 32) wenigstens ein Außendurchmessermaximum am oberen Rand des Felgenhorns und/oder wenigstens ein Innendurchmesserminimum am unteren Rand des Felgenhorns übergreift.

5. Kraftfahrzeugrad nach Anspruch 1, dadurch gekennzeichnet, daß an der Oberseite des Felgenhorns (18) eine Einkerbung (24) vorgesehen ist.

6. Kraftfahrzeugrad nach Anspruch 1, dadurch gekennzeichnet, daß wenigstens Teile des oberen und/oder unteren Rands (26, 31) des Felgenhorns (18) so geformt sind, daß die Befestigungsmittel (28, 29) aufklipsbar sind.

7. Kraftfahrzeugrad nach Anspruch 1, dadurch gekennzeichnet, daß die Befestigungsmittel (28, 29, 32) bei einem mehrteiligen Rad (11) wenigstens teilweise zwischen der Klemmfläche Radstern (12) und Felge (16) entlanggeführt werden.

8. Kraftfahrzeugrad nach Anspruch 1 oder Anspruch 7, dadurch gekennzeichnet, daß die Befestigungsmittel (32) Bohrungen (44) aufweisen, die mit Bohrungen (42) im Radkranz (12) und/oder Bohrungen (45) in der Felge (16) fluchten, so daß die Vorrichtung (13) mit dem Radkranz (12) und/oder der Felge (16) verschraubbar ist.

9. Kraftfahrzeugrad mit einer Felge (16) und einem Radstern (12) gegebenenfalls in Speichenform, mit einer ringförmigen Vorrichtung (13), welche Vorrichtung (13) die Sichtseite (23) des Felgenhorns (18) wenigstens teilweise überdeckt und die Verbindung zwischen der ringförmigen Vorrichtung (13) und dem Rad (11) lösbar ist und mit zumindest einem Befestigungsmittel (38, 39), dadurch gekennzeichnet, daß die Felge (16) und der Radstern (12) ein mehrteiliges Rad (11) bilden und die Befestigungsmittel (38, 39) der Vorrichtung (13) teilweise zwischen der Klemmflache Radstern (12) und Felge (16) entlanggeführt sind.

10. Kraftfahrzeugrad nach Anspruch 1 oder 9, dadurch gekennzeichnet, daß die Vorrichtung (13) im wesentlichen rotationssymmetrisch ist.

11. Kraftfahrzeugrad nach Anspruch 1 oder 9, dadurch gekennzeichnet, daß die Sichtseite (21) der Vorrichtung (13) im wesentlichen eben ist.

12. Kraftfahrzeugrad nach Anspruch 1 oder 9, dadurch gekennzeichnet, daß die Sichtseite (21) der Vorrichtung (13) nach außen gewölbt ist.

13. Kraftfahrzeugrad nach Anspruch 1 oder 9, dadurch gekennzeichnet, daß die Rückseite (22) der Vorrichtung (13) im wesentlichen an der Außenseite (23) des Felgenhorns (18) anliegt.

14. Kraftfahrzeugrad nach Anspruch 1 oder 9, dadurch gekennzeichnet, daß die Materialdicke der Vorrichtung (13) dicker als die Kratzertiefe ist.

15. Kraftfahrzeugrad nach Anspruch 1 oder 9, dadurch gekennzeichnet, daß die Vorrichtung (13) an dem Rad (11) auf- oder einklipsbar oder anschraubbar ist.

16. Kraftfahrzeugrad nach Anspruch 15, dadurch gekennzeichnet, daß die Vorrichtung (13) ohne Absenken des Reifendrucks auf- oder einklipsbar oder anschraubbar ist.

17. Kraftfahrzeugrad nach Anspruch 1 oder 9, dadurch gekennzeichnet, daß die Vorrichtung (13) zumindest im wesentlichen aus Kunststoff ist.

18. Kraftfahrzeugrad nach Anspruch 1 oder 9, dadurch gekennzeichnet, daß die Vorrichtung (13) zumindest im wesentlichen aus Edelstahl und/oder Aluminium ist.

19. Kraftfahrzeugrad nach Anspruch 1 oder 9, dadurch gekennzeichnet, daß die Vorrichtung (13) wenigstens teilweise lackiert und/oder verchromt und/oder galvanisiert und/oder poliert und/oder diamantgedreht ist.

20. Kraftfahrzeugrad nach Anspruch 1 oder 9, dadurch gekennzeichnet, daß die Befestigungsmittel (28, 29, 32; 38, 39) formschlüssig und/oder kraftschlüssig mit dem Rad (11) verbindbar sind.

21. Kraftfahrzeugrad nach Anspruch 1 oder 9, dadurch gekennzeichnet, daß die Befestigungsmittel (28, 29, 32; 38, 39) im wesentlichen ringförmig und/oder in sich geschlossen sind.

22. Kraftfahrzeug nach Anspruch 1 oder 9, dadurch gekennzeichnet, daß die Vorrichtung (13) ein endloser, glatter, durchgehender Ring ist.

23. Kraftfahrzeug nach Anspruch 1 oder 9, dadurch gekennzeichnet, daß die Flächennormale der Sichtseite (21) der Vorrichtung zumindest im wesentlichen parallel zur geometrischen Mittenachse des Rades (11) steht.

24. Kraftfahrzeugrad nach Anspruch 9, dadurch gekennzeichnet, daß die Breite (25) der Sichtseite der Vorrichtung (13) kleiner als der innere Radius der Vorrichtung (13) ist.

25. Kraftfahrzeugrad nach Anspruch 24, dadurch gekennzeichnet, daß die Breite (25) der Sichtseite der Vorrichtung (13) höchstens 1/4 des inneren Radius der Vorrichtung (13) beträgt.

26. Kraftfahrzeugrad nach Anspruch 24, dadurch gekennzeichnet, daß die Sichtseite (21) der Vorrichtung (13) zwischen 0,5 und 6 cm breit ist.

27. Kraftfahrzeugrad nach Anspruch 24, dadurch gekennzeichnet, daß die Sichtseite (21) der Vorrichtung (13) zwischen 2 und 4 cm breit ist.

28. Verwendung der ringförmigen Vorrichtung (13) nach Anspruch 1 oder 9 zum Abdecken von alphanumerischer Information.

## Claims

1. A motor vehicle wheel having a rim (16) and a wheel centre (12), where appropriate in spoke form, with an annular device (13), which device (13) at least partially covers the visible side (23) of the rim flange (18) and the connection between the annular device (13) and the wheel (11) is releasable, and having at least one attachment means (28, 29, 32),
**characterised in that** the device (13) comprises an attachment means (28, 29, 32) which engages at least partially over the lower edge of the rim flange (18) and an attachment means which engages at least partially over the upper edge of the rim flange (18).

2. A motor vehicle wheel according to Claim 1,
**characterised in that** the attachment means (28) engage in an annular groove on the outside of the rim flange.

3. A motor vehicle wheel according to Claim 1,
**characterised in that** the attachment means (29, 32) engage in an annular groove in the wheel disc.

4. A motor vehicle wheel according to Claim 1,
**characterised in that** the attachment means 28, 29, 32) engages over at least one external diameter maximum at the upper edge of the rim flange and/or at least one internal diameter minimum at the lower edge of the rim flange.

5. A motor vehicle wheel according to Claim 1,
**characterised in that** a notch (24) is provided on the upper surface of the rim flange (18).

6. A motor vehicle wheel according to Claim 1,
**characterised in that** at least parts of the upper and/or lower edge (26, 31) of the rim flange (18) are formed so that the attachment means (28, 29) can be clipped on.

7. A motor vehicle wheel according to Claim 1,
**characterised in that** in the case of a multi-part wheel (11) the attachment means (28, 29, 32) are guided along at least partially between the clamping area comprising wheel centre (12) and rim (16).

8. A motor vehicle wheel according to Claim 1 or Claim 7,
**characterised in that** the attachment means (32) have holes (44) which align with holes (42) in the wheel centre (12) and/or holes (45) in the rim (16), so chat the device (13) can be screwed to the wheel centre (12) and/or the rim (16).

9. A motor vehicle wheel having a rim (16) and a wheel centre (12) where appropriate in spoke form, having an annular device (13), which device (13) at least partially covers the visible side (23) of the rim flange (18) and the connection between the annular device (13) and the wheel (11) is releasable, and having at least one attachment means (38, 39),
**characterised in that** the rim (16) and the wheel centre (12) form a multipart wheel (11) and the attachment means (38, 39) of the device (13) are guided along partially between the clamping area comprising wheel centre (12) and rim (16).

10. A motor vehicle wheel according to Claim 1 or 9,
**characterised in that** the device (13) is substantially rotationally symmetric.

11. A motor vehicle wheel according to Claim 1 or 9,
**characterised in that** the visible side (21) of the device (13) is substantially flat.

12. A motor vehicle wheel according to Claim 1 or 9,
**characterised in that** the visible side (21) of the device (13) is outwardly curved.

13. A motor vehicle wheel according to Claim 1 or 9,
**characterised in that** the rear (22) of the device (13) substantially abuts the outside (23) of the flange rim (18).

14. A motor vehicle wheel according to Claim 1 or 9,
**characterised in that** the material thickness of the device (13) is thicker than the scratch depth.

15. A motor vehicle wheel according to Claim 1 or 9,
**characterised in that** the device (13) on the wheel (11) can be clipped on or in or screwed on.

16. A motor vehicle wheel according to Claim 15,
**characterised in that** the device (13) can be clipped on or in or screwed on without reducing the tyre pressure.

17. A motor vehicle wheel according to Claim 1 or 9,
**characterised in that** the device (13) is made at least substantially from synthetic material.

18. A motor vehicle wheel according to Claim 1 or 9,
**characterised in that** the device (13) is at least substantially made from special steel and/or aluminium.

19. A motor vehicle wheel according to claim 1 or 9,
**characterised in that** the device (13) is at least partially lacquered and/or chromium-plated and/or galvanised and/or polished and/or diamond-turned.

20. A motor vehicle wheel according to Claim 1 or 9,
**characterised in that** the attachment means (28, 29, 32; 38, 39) can be connected with form-fit and/or frictionally with the wheel (11).

21. A motor vehicle wheel according to Claim 1 or 9,
**characterised in that** the attachment means (28, 29, 32; 38, 39) are substantially annular and/or intrinsically closed.

22. A motor vehicle according to Claim 1 or 9,
**characterised in that** the device (13) is an endless, smooth, continuous ring.

23. A motor vehicle according to Claim 1 or 9,
**characterised in that** the surface normal of the visible side (21) of the device is at least substantially parallel to the geometric centre axis of the wheel (11).

24. A motor vehicle wheel according to Claim 9,
**characterised in that** the width (25) of the visible side of the device (13) is less than the internal radius of the device (13).

25. A motor vehicle wheel according to Claim 24,
**characterised in that** the width (25) of the visible side of the device (13) is at most ¼ of the internal radius of the device (13).

26. A motor vehicle wheel according to Claim 24,
**characterised in that** the visible side (21) of the device (13) is between 0.5 and 6 cm wide.

27. A motor vehicle wheel according to Claim 24,
**characterised in that** the visible side (21) of the device (13) is between 2 and 4 cm wide.

28. Use of the annular device (13) according to Claim 1 or 9 for covering alphanumerical information.

## Revendications

1. Roue d'automobile pourvue d'une jante (16) et d'une étoile de roue (12), le cas échéant sous une forme à rayons, avec un dispositif (13) à forme d'anneau, le dispositif (13) couvrant au moins partiellement la face visible (23) du rebord de jante (18), et la liaison entre le dispositif (13) à forme d'anneau et la roue (11) étant désolidarisable et équipée d'au moins un moyen de fixation (28, 29, 32), caractérisée en ce que
le dispositif (13) présente un moyen de fixation (28, 29, 32), saisissant par le dessus au moins partiellement le bord inférieur du rebord de jante (18), et un autre moyen de fixation, saisissant au moins partiellement par le dessus le bord supérieur du rebord de jante (18).

2. Roue de véhicule automobile selon la revendication 1,
caractérisée en ce que
les moyens de fixation (28) s'engagent dans une gorge annulaire ménagée sur la face extérieure du rebord de jante.

3. Roue de véhicule automobile selon la revendication 1,
caractérisée en ce que
les moyens de fixation (29, 32) s'engagent dans une gorge annulaire ménagée dans le disque ou voile de roue.

4. Roue de véhicule automobile selon la revendication 1,
caractérisée en ce que
les moyens de fixation (29, 28, 32) saisissent par le dessus au moins un maximum du diamètre extérieur, sur le bord supérieur du rebord de jante, et/ou saisissent par le dessus au moins un minimum du diamètre intérieur, sur le bord inférieur du rebord de jante.

5. Roue de véhicule automobile selon la revendication 1,
caractérisée en ce que
sur la face supérieure du rebord de jante (18) est prévu un entaillage (24).

6. Roue de véhicule automobile selon la revendication 1,
caractérisée en ce qu'
au moins des parties du bord supérieur et/ou inférieur (26, 31) du rebord de jante (18) sont configurées de manière à ce que les moyens de fixation (28, 29) puissent être enclipsés.

7. Roue de véhicule automobile selon la revendication 1,
caractérisée en ce que les moyens de fixation (28, 29, 32), dans le cas d'une roue (11) en plusieurs parties, sont guidées, au moins partiellement, entre la face de serrage de l'étoile de roue (12) et la jante (16).

8. Roue de véhicule automobile selon la revendication 1 ou la revendication 7,
caractérisée en ce que
les moyens de fixation (32) présentent des perçages (44) alignés avec des perçages (42) ménagés dans la couronne de roue (12) et/ou des perçages (45) ménagés dans la jante (16), si bien que le dispositif (13) peut être vissé à la couronne de roue (12) et/ou à la jante (16).

9. Roue d'automobile pourvue d'une jante (16) et d'une étoile de roue (12), le cas échéant sous une forme à rayons, avec un dispositif (13) à forme d'anneau, le dispositif (13) couvrant au moins partiellement la face visible (23) du rebord de jante (18) et la liaison, entre le dispositif (13) à forme d'anneau et la roue (11), étant désolidarisable, et équipée d'au moins un moyen de fixation (38, 39), caractérisée en ce que la jante (16) et l'étoile de roue (12) constituent une roue (11) en plusieurs parties, et les moyens de fixation (38, 39) du dispositif (13) sont guidés partiellement entre la surface de serrage de l'étoile de roue (12) et la jante (16).

10. Roue de véhicule automobile selon la revendication 1 ou 8,
caractérisée en ce que
le dispositif (13) répond sensiblement à une symétrie de rotation.

11. Roue de véhicule automobile selon la revendication 1 ou 9,
caractérisée en ce que
la face visible (21) du dispositif (13) est sensiblement plane.

12. Roue de véhicule automobile selon la revendication 1 ou 9,
caractérisée en ce que
la face visible (21) du dispositif (13) est incurvée vers l'extérieur.

13. Roue de véhicule automobile selon la revendication 1 ou 9,
caractérisée en ce que
la face arrière (22) du dispositif (13) appuie sensiblement sur la face extérieure (23) du rebord de jante (18).

14. Roue de véhicule automobile selon la revendication 1 ou 8,
caractérisée en ce que
l'épaisseur de matériau du dispositif (13) est supérieure à la profondeur d'éraflure.

15. Roue de véhicule automobile selon la revendication 1 ou 9,
caractérisée en ce que
le dispositif (13) peut être monté avec enclipsage, par application ou par introduction, ou peut être vissé sur la roue (11).

16. Roue de véhicule automobile selon la revendication 15,
caractérisée en ce que
le dispositif (13) peut être monté par enclipsage, par application ou par introduction, ou par vissage, sans avoir à baisser la pression des pneumatiques.

17. Roue de véhicule automobile selon la revendication 1 ou 9,
caractérisée en ce que
le dispositif (13) est constitué au moins essentiellement de matière plastique.

18. Roue de véhicule automobile selon la revendication 1 ou 9,
caractérisée en ce que
le dispositif (13) est au moins essentiellement constitué d'acier spécial et/ou d'aluminium.

19. Roue de véhicule automobile selon la revendication 1 ou 9,
caractérisée en ce que
le dispositif (13) est au moins partiellement verni et/ou chromé et/ou galvanisé et/ou poli et/ou soumis à un usinage de tournage avec un outil au diamant.

20. Roue de véhicule automobile selon la revendication 1 ou 9,
caractérisée en ce que
les moyens de fixation (28, 29, 32; 38, 39) sont susceptibles d'être reliés avec ajustement de forme et/ou par liaison par force à la roue (11).

21. Roue de véhicule automobile selon la revendication 1 ou 9,
caractérisée en ce que
des moyens de fixation (28, 29, 32; 38, 39) sont sensiblement à forme annulaire et/ou fermés sur eux.

22. Véhicule automobile selon la revendication 1 ou 9,
caractérisée en ce que
le dispositif (13) est un anneau sans fin, lisse, continu.

23. Véhicule automobile selon la revendication 1 ou 9,
caractérisée en ce que
la normale à la surface de la face visible (21) du dispositif est situé au moins sensiblement parallèlement à l'axe médian géométrique de la roue (11).

24. Roue de véhicule automobile selon la revendication 9,
caractérisée en ce que
la largeur (25) de la face visible du dispositif (13) est inférieure au rayon intérieur du dispositif (13).

25. Roue de véhicule automobile selon la revendication 24,
caractérisée en ce que
la largeur (25) de la face visible du dispositif (13) est au plus d'1/4 du rayon intérieur du dispositif (13).

26. Roue de véhicule automobile selon la revendication 24,
caractérisée en ce que
la face visible (21) du dispositif (13) est d'une largeur comprise en 0,5 et 6 cm.

27. Roue de véhicule automobile selon la revendication 24,
caractérisée en ce que
la face visible (21) d'un dispositif (13) est d'une largeur comprise entre 2 et 4 cm.

28. Utilisation du dispositif (13) en forme d'anneau selon la revendication 1 ou 9,
pour couvrir une information alphanumérique.
